# EUROPEAN PATENT SPECIFICATION

(11) **EP 3 379 124 B1**
(45) Date of publication and mention of the grant of the patent: **18.09.2019**
(21) Application number: 18162873.6
(22) Date of filing: 20.03.2018
(51) Int. Cl.: F16L 19/08, F16L 19/06, F16L 19/07

(54) **UNITARY ASSEMBLY AND SCREW FITTING FOR THE RECIPROCAL CONNECTION OF A THREADED END MEMBER AND A PIPE WITH A SMOOTH SURFACE**
EINHEITSANORDNUNG UND SCHRAUBVERBINDUNG FÜR DIE GEGENSEITIGE VERBINGUNG VON EINEM BAUTEIL MIT EINER GEWINDESEITE UND EINEM ROHR MIT GLATTER OBERFLÄCHE
ARRANGEMENT UNITAIRE ET RACCORD VISSÉ POUR LA CONNEXION RÉCIPROQUE D'UNE PIÈCE AVE UNE EXTRÉMITÉ FILETÉE ET UN TUYAU AVEC SURFACE LISSE

(30) Priority: 20.03.2017 IT 201700030292
(43) Date of publication of application: 26.09.2018
(73) Proprietor: Tapel di Mastromatteo Ciro & C. S.a.s, 36043 Camisano Vicentino (IT)
(72) Inventor: Ciro, Mastromatteo, 36043 Camisano Vicentino (VI) (IT)
(74) Representative: Autuori, Angelo

(56) References cited:
- EP-A1- 2 202 439
- EP-B1- 2 697 550
- GB-A- 1 588 739
- US-B1- 6 929 289

## Description

### Field of the invention

The present invention generally regards the technical field of fittings for pipes, and it particularly regards a screw fitting for the mutual joining of a threaded end member and a pipe with a smooth surface.

### State of the Art

Various types of fitting systems for joining pipes with a smooth surface to a threaded end are known.

The fittings generally comprise a threaded end, a ring nut that can be screwed thereonto, a toothed ring and a gasket. In particular, the latter may each have a juxtaposed conical surface so that the screwing of the ring nut on the threaded end corresponds to the penetration of the teeth of the toothed ring into the pipe so as to obtain the mechanical sealing.

A known drawback of the known fittings lies in risking to damage the pipe during the screwing of the ring nut and/or the risk of not sufficiently tightening the ring nut and thus not conferring to the fitting a sufficient mechanical and/or hydraulic sealing.

An example of such known fitting is described in document DE19607784, which comprises a rigid ring and a pressing ring coupled to the latter to prevent the axial detachment thereof.

Document GB1588739 describes a pipe coupling comprising a coupling body having an externally screwthreaded sleeve provided with a bore into which an end of a pipe can be fitted, and an assembly of a nut, a collet, a retainer ring, a back-up washer, an antiextrusion washer, and a separate O-ring. The collet has an internal annular recess defined by an abutment surface and an internal annular rib. The external surface of the back-up washer is provided with a recess therein which is complementary in shape to that of the internal annular rib of the collet.

Such fitting reveals several drawbacks.

First and foremost, the screwing of the ring nut and the ensuing compression of the pressing ring risks causing the detachment of the latter from the rigid ring. Furthermore, the pressing ring tends to radially compress the pipe, with the ensuing loss of mechanical and/or hydraulic sealing.

Furthermore, the fitting consists of particularly shaped pieces that make the manufacturing thereof difficult and expensive.

Furthermore, the rotation of the ring nut and the ensuing radial compression of the pressing ring on the pipe tends to impart a rotation component thereto, which tends to subject the pipe to twisting with ensuing weakening of the mechanical structure thereof and thus requiring exerting considerable screwing forces due to the juxtaposed conical surfaces.

### Summary of the invention

The present invention is defined by a unitary assembly according to claim 1, the unitary assembly being suitable to be used in a screw fitting. The invention also provides a screw fitting according to claim 2. The dependent claims describe advantageous embodiments of the invention.

An object of the present invention is to at least partly overcome the drawbacks illustrated above, by providing a screw fitting for the mutual joining of a threaded end member and a pipe with a smooth surface that is highly efficient and relatively inexpensive.

Another object of the present invention is to provide a fitting capable of limiting or eliminating the damaging of the pipe when mutually joining it and the end
Another object of the present invention is to provide a screw fitting having a high mechanical and/or hydraulic sealing on the pipe.

Another object of the present invention is to provide a screw fitting that does not subject the pipe to twisting when screwing the ring nut on the threaded end.

Another object is to provide a fitting that is particularly simple to assemble.

Another object is to provide a fitting that is particularly simple to manufacture and use.

Another object is to provide a fitting capable of enabling an easy maintenance and/or replacement of the pieces that it is made up of.

These and other objects to be further clarified hereinafter, are attained by a fitting having one or more of the characteristics described, illustrated and/or claimed herein.

### Brief description of the drawings

Further characteristics and advantages of the invention will be more apparent in light of the detailed description some preferred but non-exclusive embodiments of the invention, illustrated by way of non-limiting example with reference to the attached drawings, wherein:
**FIG. 1** is a partly sectional exploded view of a pipe **P** - fitting **1** - threaded end **T** assembly;
**FIGS. 2** and **4** are partly sectional views of the fitting **1** in different operating steps in which the pipe **P** is not represented for the sake of greater clarity;
**FIGS. 3** and **5** are enlarged views of some details respectively of FIG. 2 and FIG. 4.

### Detailed description of some preferred embodiments of the invention

With reference to the aforementioned figures, herein described is a screw fitting for the mutual joining of an end member **T** and a pipe **P** with a smooth surface. In particular, such pipe **P** may be made of any material, preferably metal or polymeric material.

It is clear that the end member **T** may be of the per se known type, or it may be the end portion of another pipe to be fitted.

In particular, the end member **T** may be substantially cyliundrical-shaped and, more in particular, it may have a threaded end portion **T1** designated, i.e. configured, to interact with the fitting **1.**

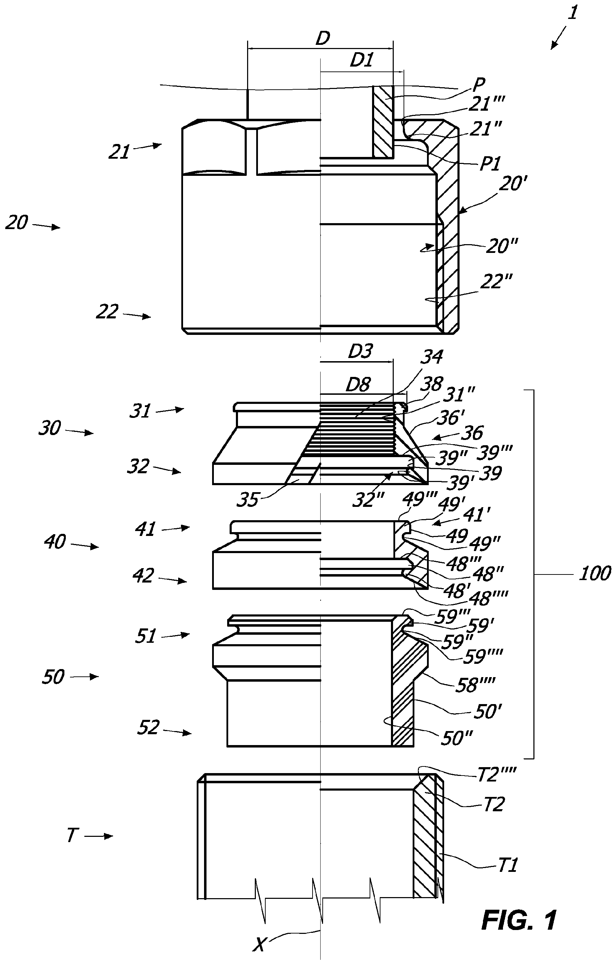

As schematically illustrated in FIG. 1, the fitting **1** may comprise a ring nut **20** that can be screwed on the threaded end portion **T1** with the interposition of a pressing member **30**, a rigid ring **40** and an elastomeric gasket **50**.

As better outlined hereinafter, the pressing member **30**, the rigid ring **40** and the gasket **50** may be coupled to each other. In particular, the rigid ring **40** may be interposed between the pressing member **30** and the gasket **50** for mutually separating them and for integrally coupling with both, so as to form a unitary assembly **100**.

Such pieces may be snap-coupled so that the assembly **100** is particularly simple to assemble.

Furthermore, in this manner, the assembly may be easily moved by an operator without the pieces being de-coupled.

The assembly **100** may also be coupled with the ring nut **20** to define an integral piece **110** that can be handled by the operator so as to be screwed onto the end **T** with the interposition of the pipe **P**.

The ring nut **20** may be substantially cylindrical-shaped and it may define a longitudinal axis **X**. In particular, the ring nut **20** may comprise an outer surface **20**' that can be grasped by the operator for the screwing and an inner surface **20**".

In the present text, the expression "inner surface" of an object is used to indicate a surface designated to be faced towards the pipe **P**, possibly with the interposition of other pieces, while the expression "outer surface" is used to indicate the surface opposite to the inner surface. By analogy, same case shall apply when the expression "inner" and/or "outer" refers to areas or portions.

Furthermore, the ring nut **20**, the pressing member **30**, the rigid ring **40** and the gasket **50** may be substantially tubular-shaped. In other words, each one of them may thus have an inner surface substantially facing the pipe **P** and an opposite outer surface.

It is thus clear that in the present text the expressions "appendages", "grooves" or "projections" shall be deemed substantially annular.

The ring nut **20** may comprise a rear portion **21** and an opposite front portion **22**. The latter may have an inner surface **22**" that is counter-threaded with respect to the threaded portion **T1** of the end **T** so that the ring nut **20** can be screwed onto the latter.

On the other hand, the rear portion **21** may comprise an inner surface **21**" designated to interact with the pressing ring **30**.

More in detail, the pressing ring **30** may have an inner area **31**" comprising a plurality of shapes **34** designated to come into contact with the outer surface **P1** of the pipe **P** and/or partly penetrate into the latter. For example, the inner area **31**" may comprise a plurality of annular projections **34**.

The pressing ring **30**, and the projections **34** in particular, may suitably be made of a material having greater hardness with respect to the surface **P1** of the pipe **P**.

The pressing ring **30** may be radially compressed so that the radial compression thereof causes the pressing ring **30** to pass from a widened configuration in which the inner diameter **D3** of the inner area **31**" is maximum and enables the sliding of the pipe **P** therein, to a compressed configuration in which the inner diameter **D3** is minimum and the annular projections **34** penetrate into the outer surface **P1** of the pipe **P** at least partly to provide the local mechanical sealing of the fitting **1**.

In other words, the maximum inner diameter **D3** of the pressing ring **30** may be substantially equal or larger than the outer diameter **D** of the pipe **P** so that the former **30** can be inserted into the latter **P**. It is clear that the inner diameter **D3** of the pressing member **30** may correspond to the peak diameter of the annular projections **34**.

Furthermore, it is clear that the characteristics of the pressing member **30**, for example the hardness or the material it is made of, may vary depending on whether the pipe is for example made of polymeric or metal material.

The pressing member **30** may be made of metal, for example steel or copper alloy. The pressing member **30** may preferably be made of brass.

The pressing ring **30** may suitably comprise a longitudinal cut **35** so as to enable it to deform elastically following a radial compression.

The pressing ring **30** may pass from the widened configuration to the compressed configuration due to the screwing of the ring nut **20** on the end **T**.

The pressing ring **30** may suitably have an outer area **36** comprising an outer surface **36**' substantially diverging towards the external with respect to the axis **X** designated to interact with the inner surface **21**" of the rear portion **21** of the ring nut **20**.

In this manner, the screwing of the ring nut **20** on the threaded end member **T** may correspond to the axial translation of the inner surface **21**" and the ensuing radial compression of the pressing ring **30**.

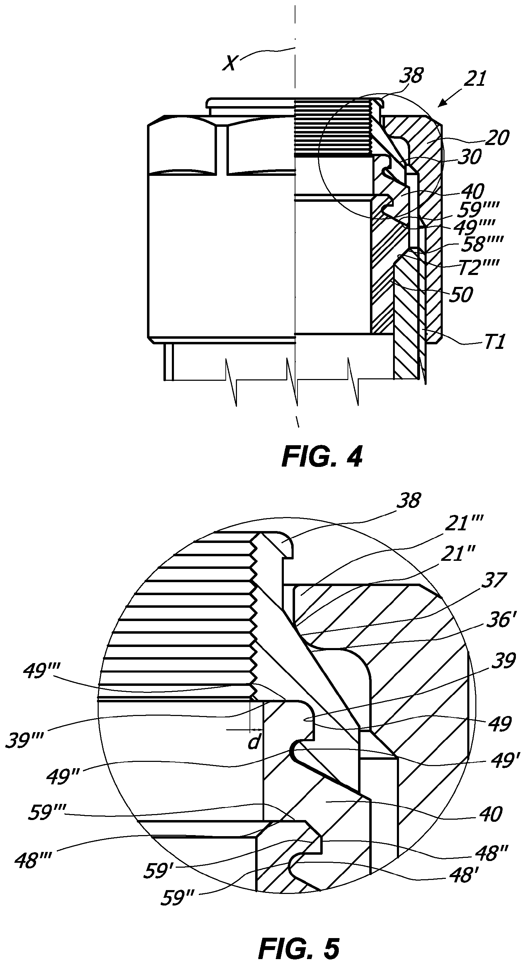

Suitably, as particularly illustrated in FIG. 4, the contact between the inner surface **21**" of the rear portion **21** of the ring nut **20** and the outer surface **36**' of the outer area **36** of the pressing ring **30** may occur in an extremely small contact area **37**, which may advantageously be substantially point-like, and preferably in a single point of tangency.

This will enable minimising the transfer of the twisting moment of the ring nut **20** to the pipe when screwing it on the threaded end member **T**, so as to avoid unwanted twisting of the pipe **P** and/or the damaging the fitting **1**.

The pressing ring **30** and the ring nut **20** may be mutually snap-coupled.

In particular, the pressing ring **30** may comprise a rear portion **31** which may include an annular projection **38** extending towards the external having an outer diameter **D8** while the portion **21** of the ring nut **20** may comprise a corresponding annular projection **21**'" having an inner diameter **D1**.

The outer diameter **D8** may suitably be substantially larger than the inner diameter **D1**.

In particular, once the pressing ring **30** and the ring nut **20** are coupled, the inner surface **21**" may be faced to surface **36**' of the pressing ring **30** and the annular projection **21**'" may be faced to the annular projection **38**.

The annular projection **38** may suitably be externally visible by the operator both upon assembling the integral piece **110** and when the fitting **1** is screwed onto the threaded end **T**.

In particular, when the pressing ring **30** is in the compressed configuration, the annular projection **21**'" may be spaced from the annular projection **38** so as to enable the operator to rapidly establish - from the external - whether the pressing ring **30** is compressed and thus - once the pipe **P** is inserted - whether the fitting **1** is closed.

The pressing ring **30** may also comprise a shaped front portion **32** designated to interact with a corresponding rear portion **41** of the rigid ring **40** to couple the latter with the pressing ring **30**.

The rear portion **41** of the rigid ring **40** and the front portion **32** of the pressing ring **30** may thus be mutually coupled when the latter is in the widened configuration so that the pressing ring **30** - during the screwing - is radially compressed remaining coupled with the rigid ring **40**.

In particular, such portions **32**, **41** may comprise a respective inner surface **32**" and outer surface **41**' mutually shaped so that the mutual radial/axial sliding of the pressing member **30** and of the rigid ring **40** is enabled/hindered once the portions **32**, **41** are coupled.

The portions **32**, **41** may preferably be mutually shaped so as to be snap-coupled.

In particular, as shown in the attached figures, the portion **32** may comprise an appendage **39**' and a seat **39**", while the portion **41** may comprise a corresponding appendage **49**' and a corresponding seat **49**". It is clear that the appendages **39**', **49**' and the seats **39**", **49**" may thus be mutually counter-shaped.

The rigid ring **40** will suitably act as a stop for the pressing member **30**, so as to stop the latter in the compressed position and prevent the further radial compression thereof following a further screwing of the ring nut **20**.

This will enable preventing the action of the operator on the ring nut **20** from damaging the pipe **P**, for example bending and thus deforming it, or one or more pieces of the fitting **1**, making the latter particularly simple and safe to use.

The rigid ring **40** may maintain the inner diameter thereof substantially unvaried upon the compression of the pressing ring **30** from the widened configuration to the compressed configuration.

Thus, the rear portion **41** may suitably act as a stop for the front portion **32** of the pressing ring **30** upon the radial compression thereof.

More in detail, the outer surface **41'** of the rear portion **41** of the rigid ring **40** may comprise a substantially flat area defining an abutment surface **49** designated to abut against a corresponding abutment area **39** of the inner surface **32**".

In particular, such abutment areas **49**, **39** may be substantially flat and coaxial with the outer surface **P1** of the pipe **P** so that the areas **49**, **39** are in mutual contact once the pressing ring **40** is in the compressed configuration.

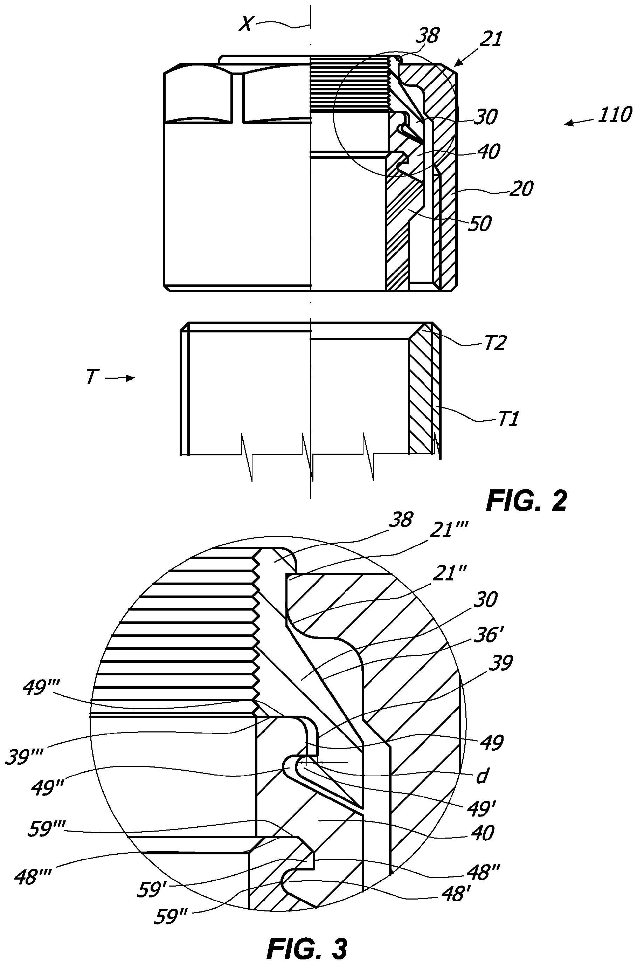

As particularly illustrated in figures 3 and 5, such areas **39**, **49** may suitably be mutually spaced when the pressing ring **40** is in the widened configuration (Fig. 3) and mutually in contact when the pressing ring **40** is in the compressed configuration (Fig. 5).

The distance **d** between the abutment areas **39**, **49** may be substantially equal to the difference between the maximum and minimum inner diameter **D3** of the pressing ring **30** in the widened and compressed configuration respectively.

The annular projections **34** may possibly penetrate into the pipe **P** for a predetermined section substantially equivalent to such distance **d**, for example for a section of about 0.2 millimetres.

The gasket **50** may have a rear portion **51** designated to be coupled with the front portion **42** of the rigid ring **40**. The latter may preferably be snap-coupled so that the mutual axial sliding is hindered once coupled.

In particular, similarly to the respective front **42** and rear **31** portions of the rigid ring **40** and of the pressing member **30**, the rear portion **51** of the gasket **50** may comprise an appendage **59**' and a seat **59**" while the front portion **42** of the rigid ring **40** may comprise a corresponding seat **48**" and appendage **48**' counter-shaped with respect to the former.

It is clear that the appendages **39**', **49**', **59**' and the seats **39**", **49**", **59**" may all be substantially annular, for example they may be projections and grooves.

The gasket **50** may be of the per se known type. The latter may have an outer surface **50**' faced to the inner surface **20**" of the ring nut **20**. The elastomeric gasket **50** may also have an inner surface **50**" designated to come into contact with the outer surface **P1** of the pipe **P**, so as to provide the local hydraulic sealing.

The gasket **50** may possibly be interposed between the pipe **P** and the ring nut **20** so as to be radially constrained by them, and between the end **T** and the rigid ring **40** so as to be axially constrained by the latter.

In particular, the end **T** may comprise a front portion **T2** designated to be faced to the gasket **50**. More in particular, the gasket **50** may comprise a front portion **52** counter-shaped with respect to the front portion **T2** so that the respective portions **52**, **T2** may come into mutual contact to obtain the hydraulic sealing following the screwing of the ring nut **20** on the threaded end **T1**.

According to a particular aspect of the invention, once the pressing ring **30** is in the compressed configuration, the ring nut **20**, the pressing ring **30** and the rigid ring **40** may be integrally joined to each other defining a single body.

In other words, the gasket **50** may remain interposed between such single body and the threaded end **T**.

The further rotation of the ring nut **20** on the threaded end member **T** may suitably promote the mutual axial sliding of the latter so as to compress the gasket **50** without the further radial compression of the pressing ring **30**.

In this manner, the hydraulic sealing of the fitting **1** may be particularly high.

In particular, the rear portion **51** may be in contact with the portion **42** of the rigid ring **40** while the front portion **52** may be in contact with the front portion **T2** of the threaded end member **T**.

The portion **32** of the pressing ring **30**, the portion **41** of the rigid ring **40**, the portion **42** of the rigid ring **40** and the portion **51** of the gasket **50** may each suitably comprise a surface **39**"', **49**"', **48**'" and **59**'" substantially perpendicular to the axis **X**.

In particular, once the pressing ring **30** is in the compressed configuration, the further rotation of the ring nut **20** may axially press the surface **21**" against the surface **36**', and thus the surface **39**'" against the surface **49**'" and the surface **48**'" against the surface **59**'" of the gasket **50** so that such surfaces transmit the axial compression to compress the gasket **50**.

Furthermore, the portion **42** and the portion **51** as well as the portion **T2** and the portion **52** may be mutually shaped so that the axial compression promotes the radial compression of the gasket **50** against the pipe **P**.

For example, the portion **42** and the portion **51** may have respective surfaces **48**"", **59**"" substantially divergent, while the portion **T2** and the portion **52** may have respective surfaces **T2**"", **58**"" substantially divergent in the opposite direction with respect to the surfaces **48**"", **59**"".

The gasket **50** may suitably have an inner diameter such to be sealingly fitted onto the pipe **P**.

The elastomeric gasket **50** may advantageously be made of a material having hardness substantially lesser than the radial compression resistance of the pipe **P** so that it can be deformed on the latter during the screwing of the fitting **1** onto the end **T** without deforming it radially.

The invention is susceptible to numerous modifications and variants all falling within the scope of the invention defined in the attached claims.

## Claims

1. A unitary assembly suitable to be used in a screw fitting for the mutual joining of a threaded end member (T) and a pipe (P) with a smooth surface, wherein the fitting (1) includes a tubular ring nut (20) defining an axis (X) having an outer surface (20') configured to be grasped by an operator in order to promote the screwing thereof onto the threaded end member (T) and a rear portion (21) comprising an inner surface (21") configured to remain faced to the pipe (P),
the unitary assembly comprising:
- a pressing ring (30) deformable upon the screwing of the ring nut (20) on the threaded end member (T) having an inner area (31") comprising a plurality of projections (34) configured to interact with the outer surface (P1) of the pipe (P) to provide a local mechanical sealing and an outer surface (36') configured to interact with the inner surface (21") of the rear portion (21) of the ring nut (20);
- an elastomeric gasket (50) having an inner surface (50") configured to come into contact with the outer surface (P1) of the pipe (P) to provide the local hydraulic sealing and an outer surface (50') faced to the ring nut (20);
- a rigid ring (40) interposed between said elastomeric gasket (50) and said pressing ring (30) for the mutual separation thereof and for the integral coupling with both,
wherein said rigid ring (40) includes a rear portion (41) susceptible to act as a stop for a front portion (32) of the pressing ring (30) upon the radial compression thereof so as to stop the pressing ring (30) in the compressed position and prevent the further radial compression thereof following a further screwing of the ring nut (20), said rigid ring (40) further including a front portion (42) opposite to the rear portion (41) susceptible to be coupled with a corresponding rear portion (51) of the elastomeric gasket (50); and further
wherein said rigid ring (40), said pressing ring (30) and said elastomeric gasket (50) are mutually snap-coupled to define a unitary assembly easily movable by an operator without the pieces being de-coupled.

2. A screw fitting for the mutual joining of a threaded end member (**T**) and a pipe (**P**) with a smooth surface, comprising:
- a tubular ring nut (**20**) defining an axis (**X**) having an outer surface (**20**') configured to be grasped by an operator to promote the screwing thereof onto a threaded end member (**T**) and a rear portion (**21**) comprising an opposite inner surface (**21**");
- a unitary assembly according to claim 1.

3. Fitting according to claim 2, wherein upon the screwing of said ring nut (**20**) on the threaded end member (**T**) said pressing ring (**30**) passes from a widened configuration to a compressed configuration, said rear portion (**41**) of said rigid ring (**40**) and said front portion (**32**) of the pressing ring (**30**) being mutually coupled when the latter is in said widened configuration so that the pressing ring (**30**) is radially compressed remaining coupled with said rigid ring (**40**) during the screwing.

4. Fitting according to claim 3, wherein said elastomeric gasket (**50**) comprises a front portion (**52**) susceptible to mutually interact with said threaded end member (**T**) when said pressing ring (**30**) is in said compressed configuration to provide the local hydraulic sealing, so that the further screwing of the ring nut (**20**) increases the hydraulic sealing on the threaded end member (**T**) without causing the further compression of the pressing ring (**30**) on the pipe (**P**).

5. Fitting according to claim 4, wherein said rear portion (**51**) of said elastomeric gasket (**50**) comprises a shaped area (**59**', **59**"), said front portion (**42**) of said rigid ring (**40**) comprising a corresponding area (**48**", **48**') counter-shaped with respect to the former so as to mutually snap-couple said elastomeric gasket (**50**) and said rigid ring (**40**).

6. Fitting according to claim 3, 4 or 5, wherein when said pressing member (**30**) is in said widened configuration it enables the sliding of the pipe (**P**) therein and wherein when said pressing ring (**30**) is in said compressed configuration, said projections (**34**) penetrate at least partially for a predetermined section into the outer surface (**P1**) of the pipe (**P**).

7. Fitting according to any one of claims 3 to 6, wherein said rear portion (**41**) of said rigid ring (**40**) and said front portion (**32**) of said pressing ring (**30**) are mutually configured so that the further radial compression of the pressing ring (**30**) as a result of a further screwing of said ring nut (**20**) is hindered once said pressing ring (**30**) is in said compressed configuration.

8. Fitting according to any one of claims 3 to 7, wherein the rear portion (**41**) of said rigid ring (**40**) includes an outer abutment surface (**41**') susceptible to come into contact with a corresponding inner abutment surface (**32**") of the front portion (**32**) of said pressing ring (**30**), said abutment surfaces (**41**', **32**") being mutually spaced apart when said pressing ring (**30**) is in the widened configuration and being mutually at contact when said pressing ring (**30**) is in the compressed configuration.

9. Fitting according to any one of claims 6 to 8, wherein when said pressing ring (**30**) is in the widened configuration said inner area (**31**") of said pressing member (**30**) has a maximum inner diameter (**D3**) substantially equal to or larger than the outer diameter (**D**) of the pipe (**P**), and wherein when said pressing ring (**30**) is in the compressed configuration it has a minimum inner diameter (**D3**) substantially smaller than the outer diameter (**D**) of the pipe (**P**), the difference (**d**) between said maximum and minimum inner diameter defining the length of said predetermined penetration section of said projections (**34**) into the pipe (**P**).

10. Fitting according to the preceding claim, wherein the distance of said abutment surfaces (**41**', **32**"), when said pressing ring (**30**) is in the widened configuration, defines said difference (d) between said maximum and minimum inner diameter (**D3**).

11. Fitting according to claim 8, 9 or 10, wherein said abutment surfaces (**41**', **32**") have respective abutment areas (**49**, **39**) which are substantially flat and coaxial to the outer surface **(P1)** of the pipe (**P**).

12. Fitting according to any one of claims 2 to 11, wherein said unitary assembly is coupled with said ring nut (**20**) to define an integral piece suitable to be handled by an operator, said unitary assembly being coupled with said ring nut (**20**) preferably in a snap-coupling manner.

13. Fitting according to any one of claims 2 to 12, wherein said pressing rin**g** (**30**) comprises an annular projection (**38**) having an outer diameter (**D8**) substantially larger than the inner diameter (**D1**) of said rear portion (**21**) of said ring nut (**20**), upon snap-coupling said ring nut (**20**) with said pressing ring (**30**), respectively with said unitary assembly, said annular projection (**38**) being externally visible by the operator, said annular projection (**38**) further being in contact with said rear portion (**21**) when said pressing ring (**30**) is in said widened configuration and being spaced from said rear portion (**21**) when said pressing ring (**30**) is in said compressed configuration.

14. Fitting according to any one of claims 2 to 13, wherein said outer surface (**36**') of said pressing ring (**30**) is configured so that the contact between the former (**36**') and said inner surface (**21**") of said rear portion (**21**) of said ring nut (**20**) occurs in a substantially point-like contact area (**37**) so as to avoid the unwanted twisting of the pipe (**P**) upon the screwing of said ring nut (**20**) onto the threaded end member (**T**), said outer surface (**36**') of said pressing ring (**30**) being preferably substantially divergent towards the external with respect to said axis (**X**), said inner surface (**21**") of said rear portion (**21**) of said ring nut (**20**) preferably having a curved profile, said contact area (**37**) preferably substantially defining a single point of tangency.

## Patentansprüche

1. Einheitliche Anordnung, die geeignet ist, um in einer Schraubverbindung zum gegenseitigen Verbinden eines Gewindeendelements (T) und eines Rohrs (P) mit einer glatten Oberfläche verwendet zu werden, wobei die Verbindung (1) eine rohrförmige Ringmutter (20) enthält, die eine Achse (X) mit einer Außenfläche (20') definiert, die ausgelegt ist, um von einem Bediener ergriffen zu werden, um das Aufschrauben derselben auf das Gewindeendelement (T) zu unterstützen, und einen hinteren Abschnitt (21), der eine Innenfläche (21") umfasst, die ausgelegt ist, um dem Rohr (P) zugewandt zu verbleiben,
wobei die einheitliche Anordnung umfasst:
- einen Pressring (30), der beim Aufschrauben der Ringmutter (20) auf das Gewindeendelement (T) verformbar ist, das einen Innenbereich (31") aufweist, der eine Vielzahl von Vorsprüngen (34) umfasst, die ausgelegt sind, um mit der Außenfläche (P1) des Rohrs (P) zusammenzuwirken, um eine lokale mechanische Abdichtung bereitzustellen, und eine Außenfläche (36'), die ausgelegt ist, um mit der Innenfläche (21") des hinteren Abschnitts (21) der Ringmutter (20) zusammenzuwirken;
- eine Elastomerdichtung (50) mit einer Innenfläche (50"), die ausgelegt ist, um mit der Außenfläche (P1) des Rohrs (P) in Kontakt zu kommen, um die lokale hydraulische Abdichtung bereitzustellen, und einer Außenfläche (50'), die der Ringmutter (20) zugewandt ist;
- einen starren Ring (40), der zwischen der Elastomerdichtung (50) und dem Pressring (30) angeordnet ist, um sie voneinander zu trennen und um sie einstückig mit beiden zu verbinden,
wobei der starre Ring (40) einen hinteren Abschnitt (41) enthält, der als Anschlag für einen vorderen Abschnitt (32) des Pressrings (30) bei dessen radialem Zusammendrücken fungieren kann, um den Pressring (30) in der zusammengedrückten Position zu stoppen und das weitere radiale Zusammendrücken derselben nach einem weiteren Aufschrauben der Ringmutter (20) zu verhindern, wobei der starre Ring (40) ferner einen vorderen Abschnitt (42) gegenüber dem hinteren Abschnitt (41) enthält, der ausgestaltet ist, um mit einem entsprechenden hinteren Abschnitt (51) der Elastomerdichtung (50) gekoppelt zu werden; und ferner
wobei der starre Ring (40), der Pressring (30) und die Elastomerdichtung (50) miteinander durch Einrastverbindung gekoppelt sind, um eine einheitliche Anordnung zu definieren, die von einem Bediener leicht bewegbar ist, ohne dass die Teile entkoppelt werden.

2. Schraubverbindung zum gegenseitigen Verbinden eines Gewindeendelements (T) und eines Rohrs (P) mit einer glatten Oberfläche, umfassend:
- eine rohrförmige Ringmutter (20), die eine Achse (X) mit einer Außenfläche (20') definiert, die ausgelegt ist, um von einem Bediener ergriffen zu werden, um das Aufschrauben derselben auf ein Gewindeendelement (T) zu fördern, und einem hinteren Abschnitt (21), der eine gegenüberliegende Innenfläche (21") umfasst;
- eine einheitliche Anordnung nach Anspruch 1.

3. Verbindung nach Anspruch 2,
wobei beim Aufschrauben der Ringmutter (20) auf das Gewindeendelement (T) der Pressring (30) von einer geweiteten Auslegung zu einer zusammengedrückten Auslegung verläuft, wobei der hintere Abschnitt (41) des starren Rings (40) und der vordere Abschnitt (32) des Pressrings (30) gegenseitig gekoppelt sind, wenn sich letzterer in der geweiteten Auslegung befindet, so dass der Pressring (30) radial zusammengedrückt wird und während des Schraubens mit dem starren Ring (40) gekoppelt verbleibt.

4. Verbindung nach Anspruch 3,
wobei die Elastomerdichtung (50) einen vorderen Abschnitt (52) umfasst, der ausgestaltet ist, um mit dem Gewindeendelement (T) zusammenzuwirken, wenn sich der Pressring (30) in der zusammengedrückten Auslegung befindet, um die lokale hydraulische Abdichtung bereitzustellen, so dass das weitere Aufschrauben der Ringmutter (20) die hydraulische Abdichtung am Gewindeendelement (T) erhöht, ohne das weitere Zusammendrücken des Pressrings (30) an dem Rohr (P) zu bewirken.

5. Verbindung nach Anspruch 4,
wobei der hintere Abschnitt (51) der Elastomerdichtung (50) einen geformten Bereich (59', 59") umfasst, wobei der vordere Abschnitt (42) des starren Rings (40) einen entsprechenden Bereich (48", 48') umfasst, der in Bezug auf den ersteren gegenprofiliert ist, um die Elastomerdichtung (50) und den starren Ring (40) miteinander durch Einrastverbindung zu koppeln.

6. Verbindung nach Anspruch 3, 4 oder 5,
wobei, wenn sich das Presselement (30) in der geweiteten Auslegung befindet, es das Gleiten des Rohrs (P) darin ermöglicht und wobei, wenn sich der Pressring (30) in der zusammengedrückten Auslegung befindet, die Vorsprünge (34) zumindest teilweise für einen vorbestimmten Abschnitt in die Außenfläche (P1) des Rohrs (P) eindringen.

7. Verbindung nach einem der Ansprüche 3 bis 6,
wobei der hintere Abschnitt (41) des starren Rings (40) und der vordere Abschnitt (32) des Pressrings (30) gemeinsam ausgelegt sind, so dass das weitere radiale Zusammendrücken des Pressrings (30) infolge eines weiteren Einschraubens der Ringmutter (20) behindert wird, sobald sich der Pressring (30) in der zusammengedrückten Auslegung befindet.

8. Verbindung nach einem der Ansprüche 3 bis 7,
wobei der hintere Abschnitt (41) des starren Rings (40) eine äußere Anlagefläche (41') enthält, die ausgestaltet ist, um mit einer entsprechenden inneren Anlagefläche (32") des vorderen Abschnitts (32) des Pressrings (30) in Kontakt zu kommen, wobei die Anlageflächen (41', 32") voneinander beabstandet sind, wenn sich der Pressring (30) in der geweiteten Auslegung befindet, und zusammen in Kontakt stehen, wenn sich der Pressring (30) in der zusammengedrückten Auslegung befindet.

9. Verbindung nach einem der Ansprüche 6 bis 8,
wobei, wenn sich der Pressring (30) in der geweiteten Auslegung befindet, der Innenbereich (31") des Presselements (30) einen maximalen Innendurchmesser (D3) aufweist, der im Wesentlichen gleich oder größer als der Außendurchmesser (D) des Rohrs (P) ist, und wobei, wenn sich der Pressring (30) in der zusammengedrückten Auslegung befindet, er einen minimalen Innendurchmesser (D3) aufweist, der im Wesentlichen kleiner ist als der Außendurchmesser (D) des Rohres (P), wobei die Differenz (d) zwischen dem maximalen und dem minimalen Innendurchmesser die Länge des vorbestimmten Eindringabschnitts der Vorsprünge (34) in das Rohr (P) definiert.

10. Verbindung nach dem vorhergehenden Anspruch, wobei, wenn sich der Pressring (30) in der geweiteten Auslegung befindet, der Abstand der Anlageoberflächen (41', 32") die Differenz (d) zwischen dem maximalen und dem minimalen Innendurchmesser (D3) definiert.

11. Verbindung nach Anspruch 8, 9 oder 10,
wobei die Anlageflächen (41', 32") jeweilige Anlagebereiche (49, 39) aufweisen, die im Wesentlichen flach und koaxial zur Außenfläche (P1) des Rohrs (P) sind.

12. Verbindung nach einem der Ansprüche 2 bis 11, wobei die einheitliche Anordnung mit der Ringmutter (20) gekoppelt ist, um ein integrales Teil zu definieren, das für die Handhabung durch einen Bediener geeignet ist, wobei die einheitliche Anordnung mit der Ringmutter (20) vorzugsweise in einer Einrastverbindung gekoppelt ist.

13. Verbindung nach einem der Ansprüche 2 bis 12, wobei der Pressring (30) einen ringförmigen Vorsprung (38) mit einem Außendurchmesser (D8) umfasst, der im Wesentlichen größer ist als der Innendurchmesser (D1) des hinteren Abschnitts (21) der Ringmutter (20), wobei beim Einrastverbinden der Ringmutter (20) mit dem Pressring (30) bzw. der einheitlichen Anordnung der ringförmige Vorsprung (38) für den Bediener von außen sichtbar ist, wobei der ringförmige Vorsprung (38) ferner mit dem hinteren Abschnitt (21) in Kontakt steht, wenn sich der Pressring (30) in der geweiteten Auslegung befindet und von dem hinteren Abschnitt (21) beabstandet ist, wenn sich der Pressring (30) in der zusammengedrückten Auslegung befindet.

14. Verbindung nach einem der Ansprüche 2 bis 13, wobei die Außenfläche (36') des Pressrings (30) so ausgelegt ist, dass der Kontakt zwischen letzterem (36') und der Innenfläche (21") des hinteren Abschnitts (21) der Ringmutter (20) in einem im Wesentlichen punktförmigen Kontaktbereich (37) auftritt, um ein unerwünschtes Verdrehen des Rohrs (P) beim Aufschrauben der Ringmutter (20) auf das Gewindeendelement (T) zu vermeiden, wobei die Außenfläche (36') des Pressrings (30) vorzugsweise im Wesentlichen gegenläufig nach außen in Bezug auf die Achse (X) ist, wobei die Innenfläche (21") des hinteren Abschnitts (21) der Ringmutter (20) vorzugsweise ein gekrümmtes Profil aufweist, wobei der Kontaktbereich (37) vorzugsweise im Wesentlichen einen einzelnen Berührungspunkt definiert.

## Revendications

1. Ensemble monobloc approprié pour être utilisé dans un raccord à vis pour l'assemblage mutuel d'un organe à extrémité filetée (T) et d'un tuyau (P) avec une surface lisse, dans lequel le raccord (1) inclut un écrou à anneau tubulaire (20) définissant un axe (X) ayant une surface externe (20') configurée pour être saisie par un opérateur afin de favoriser son vissage sur l'organe à extrémité filetée (T) et une portion arrière (21) comprenant une surface interne (21") configurée pour rester en regard du tuyau (P),
l'ensemble monobloc comprenant :
- un anneau de pression (30) déformable lors du vissage de l'écrou à anneau (20) sur l'organe à extrémité filetée (T) ayant une zone interne (31") comprenant une pluralité de saillies (34) configurées pour interagir avec la surface externe (P1) du tuyau (P) pour assurer une étanchéité mécanique locale et une surface externe (36') configurée pour interagir avec la surface interne (21") de la portion arrière (21) de l'écrou à anneau (20) ;
- un joint élastomérique (50) ayant une surface interne (50") configurée pour venir en contact avec la surface externe (P1) du tuyau (P) pour assurer l'étanchéité hydraulique locale et une surface externe (50') en regard de l'écrou à anneau (20) ;
- un anneau rigide (40) interposé entre ledit joint élastomérique (50) et ledit anneau de pression (30) pour la séparation mutuelle de ceux-ci et pour l'accouplement intégral avec les deux,
dans lequel ledit anneau rigide (40) inclut une portion arrière (41) susceptible de servir d'arrêtoir pour une portion avant (32) de l'anneau de pression (30) lors de sa compression radiale de façon à arrêter l'anneau de pression (30) dans la position comprimée et empêcher sa compression radiale supplémentaire suite à un vissage supplémentaire de l'écrou à anneau (20), ledit anneau rigide (40) incluant en outre une portion avant (42) opposée à la portion arrière (41) susceptible d'être accouplée à une portion arrière (51) correspondante du joint élastomérique (50) ; et en outre
dans lequel ledit anneau rigide (40), ledit anneau de pression (30) et ledit joint élastomérique (50) sont accouplés par encliquetage mutuellement pour définir un ensemble monobloc facilement déplaçable par un opérateur sans que les pièces soient désaccouplées.

2. Raccord à vis pour l'assemblage mutuel d'un organe à extrémité filetée (T) et d'un tuyau (P) avec une surface lisse, comprenant :
- un écrou à anneau tubulaire (20) définissant un axe (X) ayant une surface externe (20') configurée pour être saisie par un opérateur pour favoriser son vissage sur un organe à extrémité filetée (T) et une portion arrière (21) comprenant une surface interne opposée (21") ;
- un ensemble monobloc selon la revendication 1.

3. Raccord selon la revendication 2,
dans lequel lors du vissage dudit écrou à anneau (20) sur l'organe à extrémité filetée (T), ledit anneau de pression (30) passe d'une configuration élargie à une configuration comprimée, ladite portion arrière (41) dudit anneau rigide (40) et ladite portion avant (32) de l'anneau de pression (30) étant accouplées mutuellement lorsque ce dernier est dans ladite configuration élargie de sorte que l'anneau de pression (30) soit comprimé radialement en restant accouplé audit anneau rigide (40) pendant le vissage.

4. Raccord selon la revendication 3,
dans lequel ledit joint élastomérique (50) comprend une portion avant (52) susceptible d'interagir mutuellement avec ledit organe à extrémité filetée (T) lorsque ledit anneau de pression (30) est dans ladite configuration comprimée pour assurer l'étanchéité hydraulique locale, de sorte que le vissage supplémentaire de l'écrou à anneau (20) augmente l'étanchéité hydraulique sur l'organe à extrémité filetée (T) sans provoquer la compression supplémentaire de l'anneau de pression (30) sur le tuyau (P).

5. Raccord selon la revendication 4,
dans lequel ladite portion arrière (51) dudit joint élastomérique (50) comprend une zone formée (59', 59"), ladite portion avant (42) dudit anneau rigide (40) comprenant une zone correspondante (48", 48') de forme complémentaire par rapport à la première de façon à accoupler par encliquetage mutuellement ledit joint élastomérique (50) et ledit anneau rigide (40).

6. Raccord selon la revendication 3, 4 ou 5,
dans lequel lorsque ledit organe de pression (30) est dans ladite configuration élargie, il permet le coulissement du tuyau (P) à l'intérieur et dans lequel lorsque ledit anneau de pression (30) est dans ladite configuration comprimée, lesdites saillies (34) pénètrent au moins partiellement pour une section prédéterminée dans la surface externe (P1) du tuyau (P).

7. Raccord selon l'une quelconque des revendications 3 à 6,
dans lequel ladite portion arrière (41) dudit anneau rigide (40) et ladite portion avant (32) dudit anneau de pression (30) sont configurées mutuellement de sorte que la compression radiale supplémentaire de l'anneau de pression (30) suite à un vissage supplémentaire dudit écrou à anneau (20) soit entravée une fois que ledit anneau de pression (30) est dans ladite configuration comprimée.

8. Raccord selon l'une quelconque des revendications 3 à 7,
dans lequel la portion arrière (41) dudit anneau rigide (40) inclut une surface de butée externe (41') susceptible de venir en contact avec une surface de butée interne correspondante (32") de la portion avant (32) dudit anneau de pression (30), lesdites surfaces de butée (41', 32") étant espacées mutuellement lorsque ledit anneau de pression (30) est dans la configuration élargie et étant mutuellement en contact lorsque ledit anneau de pression (30) est dans la configuration comprimée.

9. Raccord selon l'une quelconque des revendications 6 à 8,
dans lequel lorsque ledit anneau de pression (30) est dans la configuration élargie, ladite zone interne (31") dudit organe de pression (30) a un diamètre interne maximal (D3) sensiblement supérieur ou égal au diamètre externe (D) du tuyau (P), et dans lequel lorsque ledit anneau de pression (30) est dans la configuration comprimée, il a un diamètre interne minimal (D3) sensiblement inférieur au diamètre externe (D) du tuyau (P), la différence (d) entre lesdits diamètres internes maximal et minimal définissant la longueur de ladite section de pénétration prédéterminée desdites saillies (34) dans le tuyau (P).

10. Raccord selon la revendication précédente, dans lequel la distance desdites surfaces de butée (41', 32"), lorsque ledit anneau de pression (30) est dans la configuration élargie, définit ladite différence (d) entre lesdits diamètres internes maximal et minimal (D3).

11. Raccord selon la revendication 8, 9 ou 10,
dans lequel lesdites surfaces de butée (41', 32") ont des zones de butée (49, 39) respectives qui sont sensiblement plates et coaxiales à la surface externe (P1) du tuyau (P).

12. Raccord selon l'une quelconque des revendications 2 à 11, dans lequel ledit ensemble monobloc est accouplé audit écrou à anneau (20) pour définir une pièce intégrale appropriée pour être manipulée par un opérateur, ledit ensemble monobloc étant accouplé audit écrou à anneau (20) de préférence en accouplement par encliquetage.

13. Raccord selon l'une quelconque des revendications 2 à 12, dans lequel ledit anneau de pression (30) comprend une saillie annulaire (38) ayant un diamètre externe (D8) sensiblement supérieur au diamètre interne (D1) de ladite portion arrière (21) dudit écrou à anneau (20), lors de l'accouplement par encliquetage dudit écrou à anneau (20) avec ledit anneau de pression (30), respectivement avec ledit ensemble monobloc, ladite saillie annulaire (38) étant visible à l'extérieur par l'opérateur, ladite saillie annulaire (38) étant en outre en contact avec ladite portion arrière (21) lorsque ledit anneau de pression (30) est dans ladite configuration élargie et étant espacée de ladite portion arrière (21) lorsque ledit anneau de pression (30) est dans ladite configuration comprimée.

14. Raccord selon l'une quelconque des revendications 2 à 13, dans lequel ladite surface externe (36') dudit anneau de pression (30) est configurée de sorte que le contact entre la première (36') et ladite surface interne (21") de ladite portion arrière (21) dudit écrou à anneau (20) se produise dans une zone de contact sensiblement ponctuel (37) de façon à éviter la torsion non souhaitée du tuyau (P) lors du vissage dudit écrou à anneau (20) sur l'organe à extrémité filetée (T), ladite surface externe (36') dudit anneau de pression (30) étant de préférence sensiblement divergente vers l'extérieur par rapport audit axe (X), ladite surface interne (21") de ladite portion arrière (21) dudit écrou à anneau (20) ayant de préférence un profil incurvé, ladite zone de contact (37) définissant sensiblement de préférence un seul point de tangence.
